# EUROPEAN PATENT APPLICATION

(11) **EP 4 386 591 A1**
(43) Date of publication of application: **19.06.2024**
(21) Application number: 22306846.1
(22) Date of filing: 12.12.2022
(51) Int. Cl.: G06F 21/32, H04L 9/40, G06F 21/34

(54) **BIOMETRIC ACCESS TO PROGRAMMABLE AUTOMATION CONTROLLER**

(71) Applicant: Schneider Electric Industries SAS, 92500 Rueil-Malmaison (FR)
(72) Inventor: SOULIER, Romain, 06700 Saint-Laurent-du-Var (FR); GORISSE, François, 06250 Mougins (FR)
(74) Representative: Schneider Electric

(57) **Abstract**

For providing access to a controller (CT) that is managing a process image and implements a runtime environment to execute an automation application using the process image, the controller (CT) being linked to a set of communication devices including a biometric device (BD), a biometric device (BD) is able to:
receive (S1) first biometric data from the user,
extract (S2) a biometric pattern from the received first biometric data,
retrieve (S3) a profile of access rights associated with a reference pattern, if the biometric pattern matches the reference pattern,
retrieve (S4) second biometric data from the user,
convert (S5) the second biometric data into a command,
compare (S6) the command with process data in a translation table according to the access rights of the profile,
if the command matches process data, send (S7) the process data to the controller (CT) to be processed by the automation application.

## Description

### FIELD OF INVENTION

The present disclosure relates generally to programmable automation controllers and, more particularly, to the processing of Input Output data exchanged between a programmable automation controller and a set of communication devices.

### BACKGROUND

Industrial automation/control systems are employed for controlling operation of a wide variety of systems, including processes, machines, etc., and are typically adaptable to different control applications through configuration and interconnection of multiple control system components or devices, such as control modules, Input/Output (I/O) modules, I/O devices, etc. Existing industrial control systems typically include a processor running or executing a control program to interact with an I/O system (e.g., typically one or more I/O modules or devices) to receive system information in the form of analog and/or digital inputs from field sensors and to provide outputs (analog and/or digital) to one or more actuators. Industrial control systems are increasingly being interconnected with management information and other systems in a manufacturing facility, and may be operatively connected to any number of communications networks to facilitate various business management functions such as inventory control, accounting, manufacturing control, etc., in addition to the process/machine control functionality.

A controller is a specialized computer control system configured to execute automation application which continuously gathers data on the state of input devices to control the state of output devices. Examples of controllers include programmable logic controllers (PLC) or programmable automation controllers (PAC), motion controllers, CNC, Smart I/O and drive controllers. A controller typically includes three major components: a processor (which may include volatile memory), volatile memory comprising an application program, and one or more input/output (I/O) ports for connecting to other devices in the automation system.

A process image is the heart of a running controller. It provides a snapshot of all inputs, outputs, and internal variables that the controller has access to at any given point in time, and the controller source code. The process image is always bound to a specific controller. In controllers, the process image is a data structure that is visible only to a runtime system and it is used to execute cyclic or event-based controller programs.

There is a need for providing access to a controller to authorized users without specific equipment and for launching industrial commands to a controller in an efficient and secure way.

### SUMMARY

This summary is provided to introduce concepts related to the present inventive subject matter. This summary is not intended to identify essential features of the claimed subject matter nor is it intended for use in determining or limiting the scope of the claimed subject matter.

In one implementation, there is provided a method for providing access to a controller that is managing a process image and implements a runtime environment to execute an automation application using the process image, the controller being linked to a set of communication devices including a biometric device, the method comprising the following steps in the biometric device:
receiving first biometric data from the user,
extracting a biometric pattern from the received first biometric data,
retrieving a profile of access rights associated with a reference pattern, if the biometric pattern matches the reference pattern,
retrieving second biometric data from the user,
converting the second biometric data into a command,
comparing the command with process data in a translation table according to the access rights of the profile,
if the command matches process data, sending the process data to the controller to be processed by the automation application.

Advantageously, the industrial system allows to transform a biometric input, like voice data, to a digital data compliant with industrial standard, like IEC61131 or IEC61499 standard. Thus it allows to launch for example a voice command translated into industrial standard data, interpreted as input data from a communication device.

In an embodiment, the biometric device compares the biometric pattern with reference patterns stored in a role database to determine the profile of access rights associated with the reference pattern matching the biometric pattern.

In an embodiment, the biometric device sends the biometric pattern to the controller that compares the biometric pattern with reference patterns stored in a role database to determine the profile of access rights associated with the reference pattern matching the biometric pattern and to send the profile of access rights to the biometric device.

In an embodiment, the set of communication devices contains I/O modules.

In an embodiment, the automation application selects instructions corresponding to the process data and sends sending the instructions to a communication device to perform a function associated with the instruction.

In an embodiment, the first biometric and the second biometric data comprise voice data, video data, or gesture data.

In an embodiment, the first biometric and the second biometric data comprise data related to user action on a touchscreen, including data related to the type of movement of a finger, duration of hold, and pressure of the finger while generating a touch event on the touchscreen.

In another implementation, there is provided an apparatus for providing access to a controller that is managing a process image and implements a runtime environment to execute an automation application using the process image, the controller being linked to a set of communication devices including the apparatus, the apparatus comprising:
one or more network interfaces to communicate with a communication network;
a processor coupled to the network interfaces and configured to execute one or more processes; and
a memory configured to store a process executable by the processor, the process when executed operable to:
   receive first biometric data from the user,
   extract a biometric pattern from the received first biometric data,
   retrieve a profile of access rights associated with a reference pattern, if the biometric pattern matches the reference pattern,
   retrieve second biometric data from the user,
   convert the second biometric data into a command,
   compare the command with process data in a translation table according to the access rights of the profile,
   if the command matches process data, send the process data to the controller to be processed by the automation application

In another implementation there is provided a computer-readable medium having embodied thereon a computer program for providing access to a controller linked to a set of communication devices including a biometric module. Said computer program comprises instructions which carry out steps according to the method according to the invention.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 shows a schematic block diagram of an industrial communication system for providing access to a controller linked to a set of communication devices including a biometric module according to one embodiment;
FIG. 2 is a flow diagram of a method for providing access to a controller linked to a set of communication devices including a biometric module according to one embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

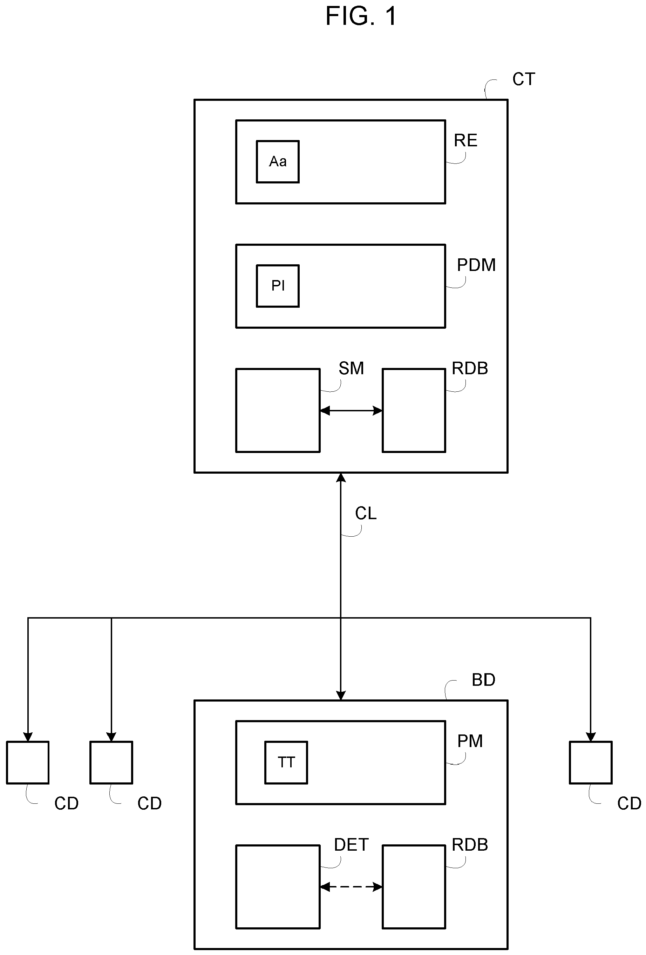

Referring to FIG. 1, an industrial communication system comprises a controller CT, a set of communication devices CD including a biometric device BD and a communication line CL. The communication line CL can be a multipoint communication line linking the controller CT and the set of communication devices CD.

The controller CT can be a programmable Logic Controller PLC, a Programmable Automation Controller PAC, or other type of processing device, which may include virtual devices like a Virtual Machine or Containers.

A communication device CD can include Analog to Digital Converter (ADC) and Digital to Analog Converter (DAC) for connecting to sensors and the real world, communications modules, digital inputs and outputs, relays, and more. A communication device may also be a gateway or a servo drive. A communication module communicates with a controller through the communication line CL with adapted packet formats.

The controller CT implements a process data manager PDM that is able to store and modify data of a process image PI and that can exchange process data with communication devices or other controllers in a consistent way. The controller CT further implements a runtime environment RE executing an automation application Aa in order to feed the automation application with the process data. A process image can be seen as a memory area where process data of I/O modules can be copied to/from, for the automation application.

The controller CT is able to manage one or multiple protocols, e.g. using a "multi-protocol middleware", on the communication line CL. A build-time application can enable the configuration, mapping and deployment of a hardware configuration for an IO system relying on one or several fieldbus protocols (e.g. EtherNet/IP, Modbus/TCP, Profinet, EtherCAT, OPCUA FX... ) via a fieldbus configurator for the communication line CL.

The controller CT is able to scan the I/O modules linked to said controller, periodically or based on events. The controller CT monitors if output data are provided by the automation application from the runtime environment or if input data are provided by an I/O module from the fieldbus, i.e. the communication line CL. The process data manager PDM of the controller CT is thus able to update its process image PI, i.e. a local copy of the process data, from the provided input data or the provided output data.

The controller CT further implements a security module SM that collaborates with a role database RDB containing profiles of access rights respectively associated with reference patterns.

A profile of access rights is associated with a user and defines the permissions for the user to perform different actions on the communication devices.

A reference pattern may be understood as a biometric template that may be defined for a user, with respect to various profiles.

For example, the reference pattern may be defined by the user as a combination of different types of biometric data. Biometric data can include, for example, voice data (representing the user's utterance or voice characteristics) concurrent with the video data of the user's facial characteristics. Also, other forms of biometric data can include iris data, retinal data, vein data, and fingerprint data. In another example with a touchscreen, the reference pattern may be defined by the user as a combination of type of movement of a finger, duration of hold, and pressure of the finger while generating a touch event on the touchscreen.

The security module SM may be configured to compare biometric data as inputs provided by a user with the reference patterns stored in the role database RDB. Based on the comparison, the security module may grant or deny access to one or more subparts of the automation application, letting the user to perform different actions allowed by the automation application on the communication devices.

In one embodiment, the administrator of the controller may be able to customize the access rights by means of a training module that may enable to train the security module. For example, the training module may facilitate the administrator to define various biometric patterns and save them as the reference patterns in the role database RDB. The security module SM may save various biometric parameters associated with the reference patterns as generated by users to be associated with said reference patterns.

In one embodiment, the training module may also facilitate the administrator of the controller to associate different reference patterns respectively with different user profiles for a same user. The administrator may include additional level of security for a user profile with more permissions, to allow selective access to subparts of the automation application. For example, the administrator may train the security module to allow a user to access to some subparts of the automation application when the biometric pattern matches a specific reference pattern and to allow the same user to access to some other subparts of the automation application when the biometric pattern matches another specific reference pattern.

The biometric device BD is connected to the controller as the other communication devices. In one embodiment, the communication devices, including the biometric device, are physically linked together through a backplane. In one embodiment, the biometric device BD is acting like an I/O module, the controller CT receiving input data provided by the biometric device from the communication line CL.

The biometric device BD comprises a biometric detector DET that is configured to operate in connection with various resources (like sensors) to permit the gathering and processing of multiple different types of biometric data. In one embodiment, the biometric detector DET may generate a message for requesting the user to provide biometric data as response input per an authentication process.

In one embodiment, the user provides biometric data by uttering a security code or password, perform a specific facial gesture, repeat a phrase or random string of digits, vary the angle of image capture or orientation of a specific device, perform a series of movements about the user's face, or a combination thereof. Alternatively, the user may be presented with a knowledge-based authentication "challenge" (e.g., recite their employee user identifier). In one embodiment, the biometric data provided by the user is gathered by sensors and provided to the biometric device in order to be transmitted to the controller CT for analysis.

In one embodiment, once the biometric data is gathered- e.g., voice and facial expression data, the biometric detector DET may analyze such data using various data recognition techniques for determining a biometric pattern. This recognition process may depend on the resources of the biometric device BD and on the type of the biometric data. For example, if the biometric data are related to a touch event on the touchscreen or voice data, the biometric detector DET may be able to provide a biometric pattern from the biometric data and to send this biometric pattern as biometric data to the controller CT.

In one embodiment, once the biometric data is gathered- e.g., voice and facial expression data, the biometric detector DET can directly send the biometric data to the controller, without analyzing such biometric data.

The security module SM of the controller analyzes the biometric data sent by the biometric device BD using various data recognition techniques for determining a biometric pattern. For example, the security module SM may employ also image, facial and voice recognition for determining a biometric pattern. If the received biometric data contain already a biometric pattern, further processing may be performed to refine the biometric pattern.

The security module SM may compare the biometric pattern with a plurality of reference patterns from the role database RDB. If the biometric pattern matches a reference pattern, the security module SM authenticates the user associated with the reference pattern and determines the user profile associated with the reference pattern. The user profile indicates the permissions attributed to the user to perform different actions. In one embodiment, the biometric pattern matches a reference pattern, if a predetermined threshold of similarity is reached.

In another embodiment, the biometric detector DET has access to the role database RDB and implements a security function to compare the biometric pattern with a plurality of reference patterns from the role database RDB. If the biometric pattern matches a reference pattern, the biometric detector DET authenticates the user associated with the reference pattern and determines the user profile associated with the reference pattern.

The biometric detector DET of the biometric device BD is configured to determine a biometric pattern from first biometric data provided by user in order to authenticate the user, as described previously. Once the user has been authenticated, the biometric detector DET is further configured to determine a command from second biometric data provided by user. In one embodiment, it is assumed that the command corresponds to a character string that closely resemble the natural speaking language of a user.

The second biometric data can include, for example, voice data (representing the user's utterance), video data (representing user's facial characteristics), gesture data, or touch event on a touchscreen (like movement of a finger, duration of hold, and pressure of the finger).

In one embodiment, the first biometric data and the second biometric data are retrieved from a same user input. For example, the user input is an utterance "OK Machine", the first biometric data correspond to voice characteristics and the second biometric data correspond to speech recognition.

The biometric detector DET may implement a correspondence table mapping results of biometric data recognition with commands. In an example with voice data, the biometric detector DET recognizes a word "Alpha" that corresponds to the command "Alpha". In an example with gesture data, the biometric detector DET recognizes a hand with thumb up that corresponds to the command "Alpha". In an example with a touch event on a touchscreen, the biometric detector DET recognizes a finger movement pattern that corresponds to the command "Alpha".

In one embodiment, the same command may be mapped to different results of biometric input recognition or to a combination of different results of biometric input recognition.

The biometric device BD further comprises a processing module PM configured to compare the command with process data in a translation table TT according to the access rights of the profile.

The translation table TT comprises commands respectively associated with process data. The process data are defined in a language directly understandable by the process data manager PDM of the controller CT. For example, the with process data are digital data compliant with industrial standard, like IEC61131 or IEC61499.

Depending on the access rights of the profile of the user, the processing module PM activates or deactivates the access to the commands in the translation table TT. For example, a user is authenticated with a profile "engineer" and has access to the commands related to this profile, like a command for a diagnostic. For example, another user is authenticated with a profile "admin" and has access to the commands related to this profile, like a command for showing the number of connected clients. Thus a same command can be accessible by one profile and not accessible by another profile.

If the processing module PM finds a command in the translation table, accessible from the profile of the user, the processing module PM sends the corresponding process data to the controller CT.

The automation application is then able to update the process image with the process data and to determine instruction corresponding to the process data in the process image. The controller CT may send the instruction to a communication device.

In one example, the process data, recognized from the voice data "Alpha", corresponds to an action of pushing a button to light on a red light. The automation application decodes the process data, as if it was received from a communication device handling such a button, and sends instruction to a communication device handling the red light to light on.

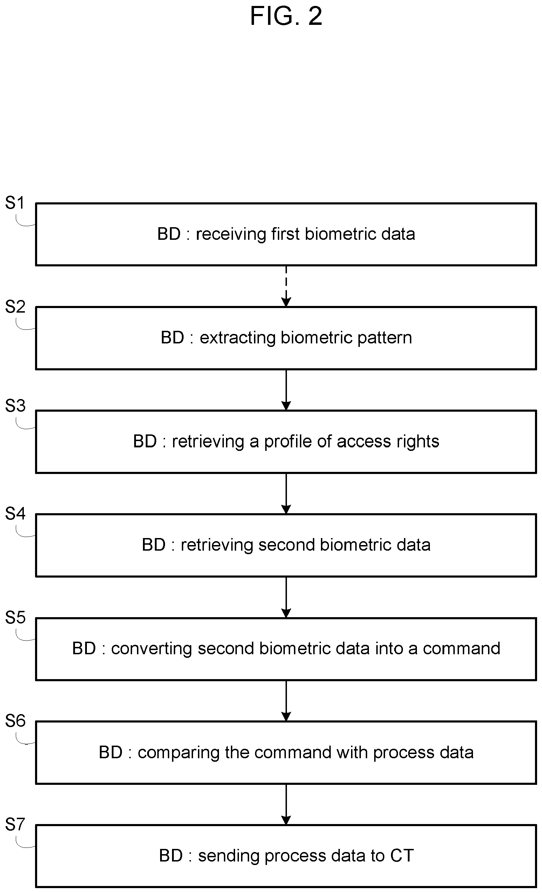

With reference to FIG. 2, a method for providing access to a controller that is managing a process image and is linked to a set of communication devices including a biometric module according to one embodiment of the invention comprises steps S1 to S7.

At step S1, the user provides a user input to the biometric device BD. Thus the biometric device BD receives first biometric data from the user for an access to the controller.

The first biometric data can include, voice data, video data or data related to the user characteristics like iris data, retinal data, vein data, and fingerprint data. The first biometric data can also include data related to user action on a touchscreen, like data related to the type of movement of a finger, duration of hold, and pressure of the finger while generating a touch event on the touchscreen.

At step S2, the biometric detector DET of the biometric device BD extracts a biometric pattern from the received first biometric data. The biometric pattern may be defined as a combination of different types of biometric data

At step S3, the biometric detector DET of the biometric device BD compares the biometric pattern with reference patterns stored in the role database RDB in one embodiment. If the biometric pattern matches a reference pattern, the biometric detector DET retrieves a profile of access rights associated with the reference pattern.

In another embodiment, the biometric device BD sends the biometric pattern to the controller in order that the security module SM of the controller compares the biometric pattern with reference patterns stored in the role database RDB. If the biometric pattern matches a reference pattern, the security module SM retrieves a profile of access rights associated with the reference pattern and sends the profile of access rights to the biometric device BD.

At step S4, the biometric device retrieves second biometric data from the user. In one embodiment, the second biometric data and the first biometric data are retrieved from a same user input. In another embodiment, the first biometric data are retrieved from a first user input and the second biometric data are retrieved from a second user input.

The type of the second biometric data can be similar to the type of the first biometric data. For example, the second biometric data can include voice data, video data, gesture data, or data related to a touch event on a touchscreen (like movement of a finger, duration of hold, and pressure of the finger).

At step S5, the biometric detector DET of the biometric device BD converts the second biometric data into a command. To that end, the biometric detector DET may implement a correspondence table mapping biometric data with commands. For example, the command is under the form of a command string that closely resembles the natural speaking language of a user, like "Alpha".

At step S6, the processing module PM of the biometric device BD compares the command with process data in a translation table according to the access rights of the profile.

Depending on the access rights of the profile of the user, the processing module PM activates or deactivates the access to the commands in the translation table TT.

At step S7, if the command matches process data, the biometric device BD sends the process data to the controller CT to be processed by the automation application.

The automation application can select instruction corresponding to the process data in the process image and sends send the instructions to a communication device to perform a function associated with the instructions.

The automation application decodes the process data, as if it was received from an I/O module and sends the instructions to a another I/O module.

An embodiment comprises a biometric device BD under the form of an apparatus comprising one or more processor(s), I/O interface(s), and a memory coupled to the processor(s). The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

The functions realized by the processor may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure. In addition, it is specifically contemplated that a particular feature described, either individually or as part of an embodiment, can be combined with other individually described features, or parts of other embodiments.

## Claims

1. A method for providing access to a controller (CT) that is managing a process image and implements a runtime environment to execute an automation application using the process image, the controller (CT) being linked to a set of communication devices including a biometric device (BD), the method comprising the following steps in the biometric device (BD):
receiving (S1) first biometric data from the user,
extracting (S2) a biometric pattern from the received first biometric data,
retrieving (S3) a profile of access rights associated with a reference pattern, if the biometric pattern matches the reference pattern,
retrieving (S4) second biometric data from the user,
converting (S5) the second biometric data into a command,
comparing (S6) the command with process data in a translation table according to the access rights of the profile,
if the command matches process data, sending (S7) the process data to the controller (CT) to be processed by the automation application.

2. A method according to claim 1, wherein the biometric device compares the biometric pattern with reference patterns stored in a role database to determine the profile of access rights associated with the reference pattern matching the biometric pattern.

3. A method according to claim 1, wherein the biometric device sends the biometric pattern to the controller that compares the biometric pattern with reference patterns stored in a role database to determine the profile of access rights associated with the reference pattern matching the biometric pattern and to send the profile of access rights to the biometric device.

4. A method according to any of previous claims, wherein the set of communication devices contains I/O modules.

5. A method according to any of previous claims, wherein the automation application selects instructions corresponding to the process data and sends sending the instructions to a communication device to perform a function associated with the instruction.

6. A method according to any of previous claims, wherein the first biometric and the second biometric data comprise voice data, video data, or gesture data.

7. A method according to any of previous claims, wherein the first biometric and the second biometric data comprise data related to user action on a touchscreen, including data related to the type of movement of a finger, duration of hold, and pressure of the finger while generating a touch event on the touchscreen.

8. A method according to any of previous claims, wherein the translation table (TT) comprises commands respectively associated with process data, wherein the process data are defined in a language directly understandable by the controller (CT).

9. An apparatus (BD) for providing access to a controller (CT) that is managing a process image and implements a runtime environment to execute an automation application using the process image, the controller (CT) being linked to a set of communication devices including the apparatus (BD), the apparatus comprising:
one or more network interfaces to communicate with a communication network;
a processor coupled to the network interfaces and configured to execute one or more processes; and
a memory configured to store a process executable by the processor, the process when executed operable to:
receive first biometric data from the user,
extract a biometric pattern from the received first biometric data,
retrieve a profile of access rights associated with a reference pattern, if the biometric pattern matches the reference pattern,
retrieve second biometric data from the user,
convert the second biometric data into a command,
compare the command with process data in a translation table according to the access rights of the profile,
if the command matches process data, send the process data to the controller (CT) to be processed by the automation application.

10. A computer-readable medium having embodied thereon a computer program for executing a method for providing access to a controller (CT) that is managing a process image and implements a runtime environment to execute an automation application using the process image according to any of claims 1 to 8.
